**Europäisches Patentamt**

**European Patent Office**

**Office européen des brevets**

(19)

(11) Numéro de publication: **0 130 106**
**A1**

(12) # DEMANDE DE BREVET EUROPEEN

(21) Numéro de dépôt: **84401199.9**

(22) Date de dépôt: **13.06.84**

(51) Int. Cl.⁴: **B 07 B 1/46**
**B 01 D 39/08**

(30) Priorité: **17.06.83 FR 8310095**

(43) Date de publication de la demande:
**02.01.85 Bulletin 85/1**

(84) Etats contractants désignés:
**AT BE CH DE FR GB IT LI LU NL SE**

(71) Demandeur: **TOILES DE CRIBLAGE GIRON Société Anonyme dite:**
**Zone Industrielle Nord BP 317**
**F-86103 Chatellerault(FR)**

(72) Inventeur: **Giron, Robert**
**39 rue du Général Sarrail**
**F-86100 Chatellerault(FR)**

(74) Mandataire: **Hasenrader, Hubert et al,**
**Cabinet BEAU DE LOMENIE 55, rue d'Amsterdam**
**F-75008 Paris(FR)**

(54) **Toile, notamment de criblage, en fil résistant gainé.**

(57) Cette toile de criblage en fils d'âme (1) métalliques entourés de gaines épaisses (2) en matériau thermoformable, notamment en polyuréthane, comporte des empreintes de blocage (3) préétablies par thermoformage sur les gaines (2) à un nombre déterminé d'intersections.

EP 0 130 106 A1

TOILE, NOTAMMENT DE CRIBLAGE, EN FIL RESISTANT GAINE.

L'invention concerne une toile, notamment de criblage, en fils d'âme résistants (généralement des fils métalliques) entourés de gaines épaisses d'un matériau thermoformable tel que le polyuréthane.

On connaît des toiles de criblage formées de fils métalliques qui subissent outre une déformation permanente en zigzag destinée à en permettre l'entrecroisement, un crantage mécanique ayant pour but d'assurer un positionnement correct des fils.

L'utilisation de toiles de fils gainés, appréciable pour des questions de résistance à l'abrasion, fait appel en général à des fils métalliques entourés d'une gaine de relativement grosse épaisseur (par exemple, une gaine de 1 mm d'épaisseur pour un fil de 2 mm de diamètre) et réalisée en un matériau très souple qui n'admet pas les déformations mécaniques permanentes et rend caduc le crantage effectué jusque là.

Le but de l'invention est de proposer une toile du type précité dans laquelle le positionnement correct des fils est toujours assuré.

Ce but est atteint selon l'invention grâce à des empreintes de blocage préétablies par thermoformage sur les gaines à un nombre déterminé d'intersections. Il n'est pas nécessaire de prévoir ces empreintes de blocage à toutes les intersections mais seulement à un ensemble d'intersections suffisant pour assurer une immobilisation complète des deux réseaux perpendiculaires de fils.

Dans la réalisation préférée de l'invention, les empreintes de blocage sont préétablies par thermoformage sur les gaines à une distance correspondant généralement au double du pas de la maille. Le tissage des deux réseaux de fils perpendiculaires fait que chaque intersection comporte une empreinte en opposition, par rapport à celle lui faisant suite, ce qui assure une immobilisation complète des fils dans les deux sens.

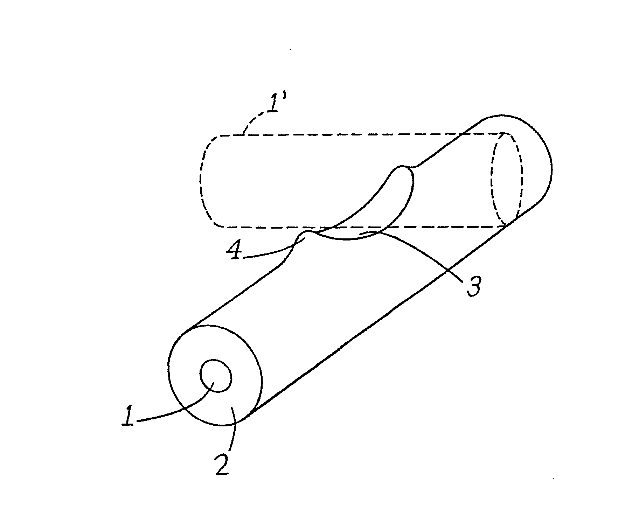

L'invention sera mieux comprise grâce à la description suivante faite en liaison avec la figure unique annexée représentant en perspective un tronçon de fil métallique 1 (corde à piano) entouré d'une gaine de polyuréthane 2. Celle-ci porte, à l'endroit d'une intersection avec un fil perpendiculaire 1' esquissé en pointillés, une empreinte de blocage 3, préformée par thermoformage. L'empreinte 3 a une forme sensiblement cylindrique, et sa profondeur est due d'une part à son enfoncement dans la gaine 2 et à la hauteur des bords 4 formés par fluage du plastique lors du formage à chaud. De la sorte, le fil 1', dont la gaine n'est pas modifiée à l'endroit de l'intersection, est calé latéralement par rapport au fil 1.

L'établissement de ces empreintes thermoformées de blocage peut s'intégrer à un cycle automatique de fabrication de la toile.

3 0130106

REVENDICATIONS

1. Toile, notamment de criblage, en fils (1) d'âme résistant, entourés de gaines épaisses (2) de matériau thermoformable, caractérisé par des empreintes de blocage (3) préétablies par thermoformage sur les gaines à un nombre déterminé d'intersections.

2. Toile selon la revendication 1, caractérisé par des gaines (2) de polyuréthane.

3. Toile selon l'une quelconque des revendications 1 ou 2, caractérisé par des fils d'âme métalliques (1).

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl ³) |
|---|---|---|---|
| A | FR-A-1 310 150 (M. CLARIN) <br> * page 1, colonne de gauche, ligne 33 - page 2, colonne de droite, dernière ligne; figures 1,2 * | 1 | B 07 B    1/46 <br> B 01 D   39/08 |
| | --- | | |
| A | FR-A-2 106 195 (DUNLOP) <br> * page 5, lignes 1-9; page 6, lignes 1-33; figure 15 * | 1 | |
| | --- | | |
| A | FR-A-2 028 162 (BERKENHOFF UND DREBES) <br> * page 5, ligne 25 - page 6, ligne 17; page 7, lignes 2-6; page 8, lignes 9-32; figures 2-5 * | 1,2 | |
| | --- | | **DOMAINES TECHNIQUES RECHERCHES (Int. Cl. ³)** |
| A | FR-A-1 031 748 (OBERDORFER) <br> * page 2, colonne de droite, résumé en entier; figures * | 1,3 | B 07 B <br> B 01 D <br> D 03 D <br> D 21 F |
| | --- | | |
| A | FR-A- 695 819 (T. YONEKURA) <br> * page 2, colonne de gauche, lignes 24-41; figures 1-3 * | 1 | |
| | --- | | |
| A | DE-B-1 151 430 (STEINHAUS) | | |
| | --- | | |
| A | GB-A- 341 150 (R. HERRMANN) | | |
| | ---          -/- | | |

Le présent rapport de recherche a été établi pour toutes les revendications

| Lieu de la recherche | Date d'achèvement de la recherche | Examinateur |
|---|---|---|
| LA HAYE | 11-09-1984 | LAVAL J.C.A |

**Office européen des brevets**

**RAPPORT DE RECHERCHE EUROPEENNE**

EP 84 40 1199

| DOCUMENTS CONSIDERES COMME PERTINENTS | | | Page 2 |
|---|---|---|---|

| Catégorie | Citation du document avec indication. en cas de besoin, des parties pertinentes | Revendication concernée | CLASSEMENT DE LA DEMANDE (Int Cl ³) |
|---|---|---|---|
| A | DE-B-1 228 499 (UNIVERSITÄT DRESDEN) | | |
| | --- | | |
| A | FR-A-2 322 670 (Y. KAI) | | |
| | ----- | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 11-09-1984 | LAVAL J.C.A |

CATEGORIE DES DOCUMENTS CITES

X . particulièrement pertinent à lui seul
Y . particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& . membre de la même famille, document correspondant

OEB Form 1503 03 82